# NEUE EUROPÄISCHE PATENTSCHRIFT

(11) **EP 1 286 833 B2**
(45) Veröffentlichungstag und Bekanntmachung des Hinweises auf die Entscheidung über den Einspruch: **31.07.2013**
(45) Hinweis auf die Patenterteilung: 22.08.2007
(21) Anmeldenummer: 01933825.0
(22) Anmeldetag: 12.04.2001
(51) Int. Cl.: B32B 37/15, B42D 15/10, C09J 175/04, C09J 177/06

(54) **VERFAHREN ZUR HERSTELLUNG VON MEHRSCHICHTIGEN DOKUMENTENKARTEN**
METHOD FOR PRODUCING DOCUMENT CARDS COMPRISING SEVERAL LAYERS
PROCEDE DE PRODUCTION DE CARTES DOCUMENTS MULTICOUCHES

(30) Priorität: 20.05.2000 DE 10025093
(43) Veröffentlichungstag der Anmeldung: 05.03.2003
(73) Patentinhaber: Sagem Orga GmbH, 33106 Paderborn (DE); Lohmann GmbH & Co. KG, 56567 Neuwied (DE)
(72) Erfinder: HENN, Ralf, 56579 Hardert (DE); FISCHER, Dirk, 33178 Borchen (DE); SCHUMACHER, Matthias, 33178 Borchen (DE)
(74) Vertreter: Schneiders, Josef
(86) Internationale Anmeldenummer: PCT/EP2001/004232
(87) Internationale Veröffentlichungsnummer: WO 2001/089831

(56) Entgegenhaltungen:
- EP-A- 0 348 349
- EP-A- 0 686 501
- WO-A-00/13899
- DE-A- 19 631 283
- GB-A- 2 314 791
- US-A- 4 389 472
- US-A- 4 389 472
- DATABASE WPI Section Ch, Week 198844 Derwent Publications Ltd., London, GB; Class A23, AN 1988-312307 XP002175856 & JP 63 230781 A (AGENCY OF IND SCI & TECHNOLOGY), 27. September 1988 (1988-09-27)
- PATENT ABSTRACTS OF JAPAN vol. 011, no. 038 (C-401), 4. Februar 1987 (1987-02-04) & JP 61 203187 A (DENKI KAGAKU KOGYO KK), 9. September 1986 (1986-09-09)
- PATENT ABSTRACTS OF JAPAN vol. 1997, no. 07, 31. Juli 1997 (1997-07-31) & JP 09 076445 A (DAINIPPON PRINTING CO LTD), 25. März 1997 (1997-03-25)

## Beschreibung

Die Erfindung betrifft ein Verfahren zur Herstellung mehrschichtiger Dokumentenkarten, insbesondere mehrschichtiger Ausweiskarten aus Kunststoff, wobei die Karte einen Kartenkern mit wenigstens einer Kartenkernschicht, einer Deckschicht auf wenigstens einer Seite des Kartenkerns und Klebstoffschichten zwischen den einzelnen Kartenschichten aufweist und der Kartenkern ein- oder zweiseitig bedruckt ist, mit den Verfahrensschritten Bereitstellen der bedruckten Schicht(en) des Kartenkerns, Bereitstellen der Deckschichten, Aufbringen der Klebstoffschichten auf die einzelnen Deck- und/oder Kernschichten, positionsgenaues Übereinanderlegen der einzelnen Kartenschichten und Verbinden der Kartenschichten in einer Laminationspresse unter dem Einfluß von Druck und Wärme.

Mehrschichtige Ausweiskarten sind als Scheck- und Bankkarten sowie als Ausweisdokumente weit verbreitet. Oftmals werden diese Karten noch mit einem Magnetstreifen oder einem integrierten Schaltkreis (Halbleiterbaustein, Chip) versehen. Ausweiskarten mit Chip werden als Chipkarte oder smart-cards bezeichnet. So werden mehrschichtige Ausweiskarten mit Chip in großem Umfang als Zugangsberechtigung im GSM-Mobilfunk verwendet, wo der Ausweiskarteninhaber sich durch Einstecken seiner Ausweiskarte (GSM-Karte) in Mobilfunkendgerät gegenüber dem Mobilfunknetz als Zugangsberechtigter ausweist.

Für die Kartenschichten - Kartenkernschichten wie auch Deckschichten - kommen verschiedene Materialien in Betracht: Polyvinylchlorid (PVC), Polycarbonat (PC), Acrylnitril-Butadien-Styrol (ABS), Polyethylenterephthalat (PET, PETG, PETF). In Ausweisdokumenten ist die Verwendung von Papierkernschichten üblich. Die Wahl der Materialien und der Kartenaufbau hängen von verschiedenen Faktoren ab. Diese Faktoren sind beispielsweise die gewünschten mechanischen Eigenschaften der herzustellenden Ausweiskarte, das Verhalten bei hohen und niedrigen Temperaturen, die Frage der Bedruckbarkeit, die Frage der Laserbeschriftbarkeit sowie wirtschaftliche und ökologische Vorgaben.

Mehrschichtige Ausweiskarten werden hergestellt, in dem in einem ersten Schritt der ein- oder beidseitig bedruckte Kartenkern bereitgestellt wird. Der Kartenkern besteht entweder aus einer ein- oder beidseitig bedruckten Kartenkernschicht oder zwei Kartenkernschichten, von denen wenigstens eine nach außen weisende Seite bedruckt ist. Danach werden die Kartendeckschichten bereitgestellt. Alle Schichten werden in einer Laminationspresse miteinander verbunden.

Um eine ausreichende Haftung der Schichten aneinander zu erreichen, wird in der Regel eine Klebstoffbeschichtung aufgebracht. Zur Verbindung der Kartenkernschichten wird gegebenenfalls eine dieser Schichten mit Klebstoff beschichtet. Zur Aufbringung der Deckschichten kann die Klebstoffbeschichtung entweder auf der Rückseite der Deckschichten erfolgen oder aber auf die bereits bedruckte Kartenkernschicht aufgebracht werden.

Bei den derzeitig verwendeten Klebstoffen handelt es sich vorzugsweise um Formulierungen auf Basis von Polyurethanen, Polyestern oder Polyamiden und/oder deren Copolymeren. Insbesondere werden thermoplastische Klebstoffformulierungen eingesetzt. Eine Vernetzung dieser thermoplastischen Klebstoffe durch die Anwendung von energiereicher Strahlung ist bekannt, erfordert aber einen zusätzlichen Verfahrensschritt und birgt die Gefahr, daß die Kunststoff- und/oder Klebstoffmaterialien für das Produkt nachteilige Veränderungen erfahren. Hinzuweisen ist insbesondere auf die Tendenz einer Reihe von Kunststoffen, sich bei der Anwendung energiereicher Strahlung zu verfärben.

Die DE 196 31. 283 A1 offenbart ein Verfahren gemäß dem Oberbegriff des Anspruchs 1 zur Herstellung einer Datenträgerkarte, bei der die Klebebeschichtung aus einer wässrigen Dispersion eines Polyester-Polyurethan-Elastomers und/oder Acrylatcopolymers mit einem polyfunktionellen Isocyanat-Vernetzer und einem Verdickungsmittel besteht. Die damit beschichteten Folien werden nach dem Aushärten der wässrigen Dispersionsschicht unter Wärme und Druck verbunden. Die hier offenbarte Klebebeschichtung ergibt erst nach der Aushärtung einen heiß kaschierfähigen Termoplasten.

Die US 4, 389, 472 beschreibt ein Verfahren zur Herstellung eines fälschungssicheren Dokuments, bei dem eine Laminierung sowie zusätzlich eine Vernetzung des Klebstoffsystems erfolgt.

Aus der EP 0 348 349 B1 ist eine Sicherheitskarte bekannt, die einen datentragenden Bogen, welcher mit einer Gelatineschicht versehen ist und einer transparenten polymeren Folie die ebenfalls mit einer Gelatineschicht beschichtet ist umfaßt. Der Verbund zwischen Boden und Folie wird über eine Klebstoffmasse hergestellt, die zwischen den Gelatineschichten polymerisiert ist. Die Klebstoffmasse selbst besteht aus einer Carbonsäure mit wenigstens einer polymerisierbaren Acrylgruppe.

Die JP 63230781 A offenbart ein zweikomponentiges Klebstoffsystem mit Schmelzklebeeigenschäften und Vernetzung. Die eingesetzten Polyamidharze verfügen über endständige Amingruppen (α,ω -Terminierung) und werden mit lsocyanatacrylaten umgesetzt, um endständige Doppelbindungen einzuführen. Die Polymerisation wird mittels eines Peroxids initiiert. Insgesamt findet überwiegend eine Kettenverlängerung statt.

Die EP 0 886 501 A betrifft ein Verfahren zum Aufbringen einer gemischten, mehrschichtigen Beschichtung aus Farbe und Film auf ein Metallblech. Das Metallblech wird mit einer Farbschicht mit klebenden Eigenschaften beschichtet und bei Temperaturen von 200°C bis 230°C aktiviert. Im Anschluß wird ein klarer Plastikfilm unter Druck auf den gefärbten Metallstreifen aufgetragen. Die Farbe mit klebenden Eigenschaften umfasst ein Polyesterharz, ein Melaminharz oder ein Blockisocyanat.

Der Einsatz covalent vernetzender Klebstoffsysteme ist bislang nicht bekannt geworden. Aber gerade covalent vernetzte Klebstoffformulierungen lassen eine Erhöhung der Verbundfestigkeit und insbesondere eine Verbesserung der Temperatur- und Lösemittelbeständigkeit erwarten.

Insbesondere erwünscht ist eine erhöhte Temperaturfestigkeit, einerseits, um eine VerformungNeränderung der Karte unter dem Einfluß von Wärme zu verhindert, wie sie bei bestehenden Systemen bereits auftreten kann, wenn die Karte hinter der Windschutzscheibe eines Kraftfahrzeuges der Sonnenstrahlung ausgesetzt wird. Verhindert werden soll aber auch nachhaltig eine zerstörungsfreie Delamination der bedruckten Karten- und Deckschicht, um eine Verfälschung und den Mißbrauch derartiger Ausweiskarten zu verhindern.

Dementsprechend liegt der Erfindung die Aufgabe zugrunde, ein Verfahren bereitzustellen, mit dem eine dauerhafte und insbesondere temperatur- und lösungsmittelfeste Verbindung der einzelnen Schichten eines mehrschichtigten Dokuments, insbesondere einer Ausweiskarte, erreicht werden kann.

Erreicht werden sollen unter anderem eine Erhöhung der Verbundfestigkeit zwischen Deckschicht und bedruckter Kartenkernschicht gegenüber bisher eingesetzten Formulierungen, so daß eine zerstörungsfreie Delamination des Folienverbundes unmöglich wird.

Diese Aufgabe wird mit einem Verfahren mit den Merkmalen des Anspruchs 1 gelöst.

Im folgenden wird die Erfindung anhand von Ausweiskarten aus Kunststoff beschrieben. Entsprechendes gilt aber für alle mehrschichtigten Dokumente, wie beispielsweise auch Datenträger, Ausweisdokumente, Wertdokumente und dergleichen, wobei der Kern aus Kunststoff oder einem anderen Material bestehen kann.

Thermoplastische Klebstoffsysteme sind bevorzugt bei der Herstellung von Karten für eine Vielzahl unterschiedlicher Anwendung, da sie anderen Produkten in Bezug auf Verarbeitbarkeit, Verbundfestigkeit und Temperaturbeständigkeit überlegen sind. Dennoch zeigen diese Klebstoffsysteme Einschränkungen, die im wesentlichen auf der Reversibilität ihres Verhaltens unter Temperatur-und Lösemitteleinfluß beruhen. Diese Einschränkungen können erfindungsgemäß vermieden werden.

Im folgenden werden für das Verfahren und das Klebstoffsystem gemäß der Erfindung relevante Merkmale und Ausführungsformen anhand des Klebstoffsystems beschrieben.

Bei dem erfindungsgemäß zum Einsatz kommenden Klebstoffsystem handelt es sich insbesondere um die Kombination eines thermoplastischen Kunststoffes mit Doppelbindungen mit einem Peroxid. Bevorzugte thermoplastische Kunststoffe mit Doppelbindungen sind Polyamide, insbesondere Polykondensate, die durch Reaktion von Diaminen mit dimerisierten Fettsäuren gebildet werden. Als Ausgangsprodukte werden in der Regel polyfunktionelle Amine, wie z. B. Ethylendiamin oder Polyethylenamine eingesetzt, die mit höheren Dicarbonsäuren, vorzugsweise dimerisierten Fettsäuren aus Linolsäure, Ölsäure oder Tallölfettsäure zur Reaktion gebracht werden. Die Polykondensation liefert die als Polyamidharze bezeichneten thermoplastischen Polyamide. Neben diesen in ihrer Molekülstruktur mehr oder weniger definiert aufgebauten (Homo) Polyamiden lassen sich durch Variation der Ausgangsprodukte (unterschiedliche Diamine, Aminocarbonsäuren und deren Lactame mit anderen Dicarbonsäuren) und deren Verhältnissen zueinander entsprechende Copolyamide mit spezifischen Eigenschaftsprofil aufbauen. Voraussetzung für die erfindungsgemäße Einsatzfähigkeit solcher Polyamidharze ist allerdings, daß in ihrer Molekülstruktur noch eine C=C-Doppelbindung vorhanden ist. Grundsätzlich lassen sich alle thermoplastischen Polyamidharze, die noch über C=C-Doppelbindungen verfügen, erfindungsgemäß einsetzen.

Erfindungsgemäß werden diese noch vorhandenen Doppelbindungen für die Vernetzung in einer Radikal-Kettenreaktion genutzt. Die hierzu verwendeten Radikalstarter/Vernetzer bestehend aus Peroxiden und wirken als Initiatoren der radikalischen Polymerisation. Entsprechend der Verarbeitungstemperatur eignen sich u.a. die folgenden organischen Peroxiverbindungen als sogenannte Radikalstarter:
Methylethylketonperoxid (-80°C)
Dibenzoylperoxid (-100°C)
Di(tert.-Butyl)peroxid (-150°C)
Cumolhydroperoxid (~180°C)
tert.-Butylperoxibenzoat (~130°C)
tert.-Butylhydroperoxid (-200°C).

Es ist besonders vorteilhaft, wenn die Verarbeitungstemperatur des Schmelzklebers (Erweichungstemperatur bzw. Laminiertemperatur) mit der Aktivierungstemperatur des Radikalstarters korrespondiert. Auf diese Weise kann die für den jeweiligen Schmelzkleber erforderliche Laminiertemperatur gleichzeitig zur Aktivierung des Radikalstarters herangezogen werden. Bei einer typischen Verarbeitungstemperatur im Bereich von 130 bis 150°C kämen dementsprechend thermoplastische doppelbindungshaltige Harze mit einer Erweichungstemperatur in diesem Bereich zusammen mit Dibenzoylperoxid, Di(tert.-Butyl)peroxid oder tert-Butylperoxibenzoat in Frage. Aus diesen Komponenten bestehende Klebstoffsysteme werden erst bei Einwirken der Laminierungstemperatur aktiviert und vernetzt; bei Normaltemperatur sind sie stabil und auf übliche Art und Weise verarbeitbar.

Das Reaktionsschema für eine C-C-Verknüpfung eines thermoplastischen Harzes mit Dibenzoylperoxid als Radikalstarter ist nachstehend wiedergegeben.
(1) Radikalbildung durch thermische Spaltung 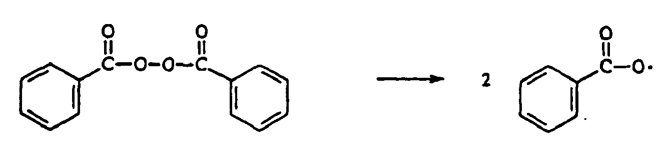
(2) Kettenstart 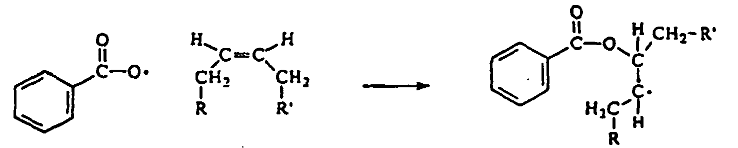 Je nachdem welche Monomere dem Polykondensat zugrunde liegen, handelt es sich bei den Resten R bzw. R' zum Beispiel um:
   - -(CH₂)ₙ-CONH-R", n=2-9,
   - Rest einer dimerisierten Linolsäure: 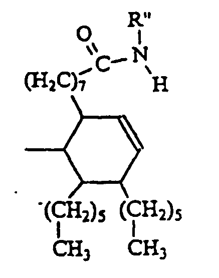
   Hierbei steht der Rest R" für weitere Kettenbausteine des Polyamidharzes.
(3) Kettenwachstum 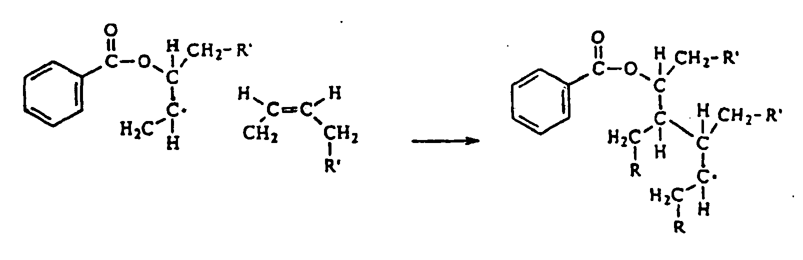
(4) Kettenabbruch

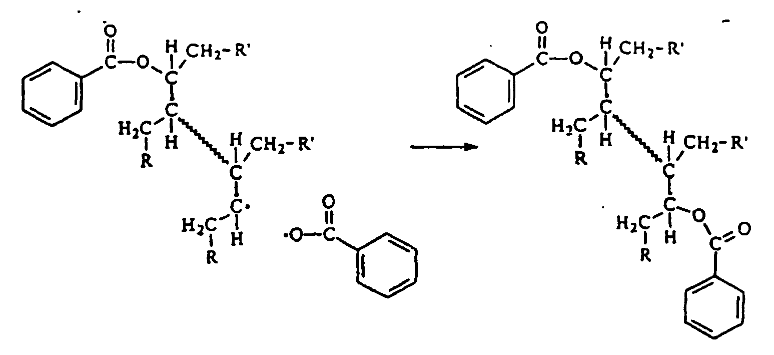

Vorzugsweise beträgt die Aktivierungstemperatur für das erfindungsgemäß zum Einsatz kommende Peroxid 60°C oder mehr. Sie liegt insbesondere im Bereich von 80 bis 250°C.

Erfindungsgemäß geeignete Schmelzklebstoffe, insbesondere solche auf Basis von ungesättigten Polyurethanen, Polyestern und Polyamiden, haben zweckmäßigerweise eine Erweichungspunkt im Bereich von 80 bis 250°C und verfügen über eine Schmelzviskosität bei 160°C von 50.000 bis 110.000 mPa.s gemäß ASTMD3236. Besonders bevorzugt liegt die Erweichungstemperatur im Bereich von 100 bis 160°C.

Sofern es sich bei thermoplastischen Kunststoff um ein ungesättigtes Polyamid handelt, sind Kondensate aus ungesättigten dimeren Fettsäuren mit Polyaminen bevorzugt. Als Polyamide kommen insbesondere Ethylendiamin, Diethylentriamin und Alkylendiamine mit bis zu 12 C-Atomen in Frage. Besonders bevorzugt sind Kondensate von ungesättigter dimerisierter Linolsäure mit einem dieser Polyamine, die den vorstehend aufgezeigten Randbedingungen in bezug auf Erweichungspunkt und Schmelzviskosität genügen.

In der Regel enthält das Klebstoffsystem 1 bis 10 Gew.-% Peroxid als Radikalstarter, insbesondere 2 bis 5 Gew.-%, jeweils bezogen auf den ungesättigten thermoplastischen Klebstoff. Zur Beschichtung der Kartenschichten wird das Klebstoffsystem in der Regel in Lösung eingesetzt, wobei als Lösungsmittel beispielsweise Toluol und Isopropanol in Frage kommen. Beschichtungsverfahren und Menge sind üblich und dem Fachmann bekannt.

Der Vorzug des Verfahrens und Klebstoffsystems liegt insbesondere auch darin, daß das Klebstoffsystem die thermoplastische Kunststoffkomponente und die Vernetzerkomponente als Gemisch enthält, das erst durch die Anwendung erhöhter Temperatur aktiviert wird.

Gemäß einer anderen bevorzugten Ausführungsform der Erfindung enthält das Klebstoffsystem nebeneinander eine Polyisocyanatkomponente und eine damit reaktive, aktiven Wasserstoff enthaltende thermoplastische Harzkomponente.

In dieser Variante der Erfindung nutzt die eingesetzte Klebstoffformulierung die Reaktivität der Isocyanatkomponente zur Vernetzung der Klebstoffschicht. Die zweite Harzkomponente besitzt freie funktionelle Gruppen mit gegenüber Isocyanatfunktionen reaktiven Wasserstoffatomen, die bei Aktivierung des Systems als Reaktionspartner der Isocyanatgruppen für die Polyaddition zur Verfügung stehen. Insbesondere sind dies Hydroxylgruppen und Aminogruppen. Die zwei Komponenten reagieren allerdings noch nicht bei Raumtemperatur oder während der Verarbeitung des Klebstoffes, sondern erst oberhalb einer kritischen Temperatur, die während der Lamination der Ausweiskarte erreicht wird. Dabei gelten die für das Klebstoffsystem auf Basis ungesättigter thermoplastischer Klebstoffe und Peroxide genannten Aktivierungs- und Verarbeitungstemperaturen.

Die Polyisocyanatkomponente des Klebstoffsystems enthält dabei ein Polyisocyanat auf Basis von Hexamethylendiisocyanat (HDI), Isophorondiisocyanat (IPDI), Toluylendiisocyanat (TDI), Diphenylmethandiisocyanat (MDI) oder dergleichen. Dabei sind zur Erzielung einer guten optischen Qualität und Elastizität der Klebstoffverbindung insbesondere aliphatische Diisocyanatverbindungen bevorzugt, die eine geringe Tendenz zum Vergilben zeigen.

Das Polyisocyanat kann als Monomer vorliegen, grundsätzlich aber auch als Prepolymer, d.h. teilvernetzt mit einem üblichen Vernetzungsmittel. Solche Polymere sind bekannt und enthalten in jedem Fall für die Weiterführung der Reaktion wenigstens zwei reaktive Isocyanatgruppen pro Molekül/Kette. Übliche Vernetzer für die Prepolymerbildung sind Glykole, Polyetherole und Polyesterole, aber auch Polyamine.

Um eine vorzeitige Reaktion des Klebstoffsystems (bereits bei Raumtemperatur) zu verhindern, ist die Polyisocyanatkomponente blockiert. Dies kann auf zwei Wegen erreicht werden.

Bei der chemischen Blockierung oder Verkappung werden die eingesetzten NCO-Gruppen mit üblichen Blockierungsmittel zur Reaktion gebracht, die oberhalb einer Deblockierungstemperatur wieder abgespalten werden. Mit einem Blockierungsmittel HBL läuft die Reaktion wie folgt ab:

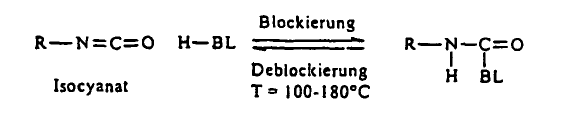

Auch hier stellt das Klebstoffsystem bei Raumtemperatur ein stabiles System zweier Komponenten dar. Durch die Wahl des Blockierungsmittels kann die Blockierungstemperatur variiert werden. Zudem läßt sich durch den Einsatz von Katalysatoren die Deblockierungstemperatur senken. Als Blockierungsmittel kommen beispielsweise in Frage:
Phenol (140 bis 180°C)
ε-Caprolactam (160 bis 180°C)
Butanonoxim (135 bis 155°C)
Malonsäureester (100 bis 130°C).

Eine besondere Möglichkeit der Blockierung stellt die Dimerisierung von Isocyanatgruppen zu Urethdion dar, die katalytisch nach folgendem Schema abläuft.

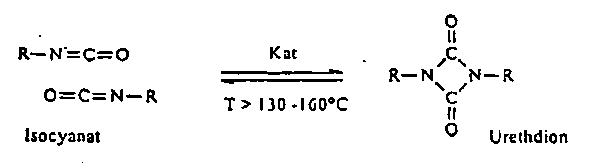

Bei dieser "inneren" Blockierung dient das lsocyanat zugleich als Blockierungsmittel mit dem Vorteil, daß bei der Deblockierung kein Blockierungsmittel frei wird, das die Klebewirkung des Klebstoffsystems beeinflussen könnte.

Die Blockierung des Polyisocyanats kann auch auf mechanische Art und Weise erfolgen, d. h. durch Mikroverkapselung der Isocyanatkomponente. In jedem Fall liegt das Klebstoffsystem als Suspension zweier Komponenten vor, d. h. der mikroverkapselten Isocyanatkomponente in dem Vernetzer, die beide nicht miteinander mischbar ist. Erst oberhalb einer kritischen Temperatur wird die Verkapselung aufgehoben; die Freisetzung des Polyisocyanats und die innige Vermischung mit dem Vernetzer ermöglicht die Vernetzungsreaktion.

Die Verkapselung der Isocyanatkomponente kann auf an und für sich bekannte Art und Weise erreicht werden, beispielsweise durch Teilreaktion der Isocyanatgruppen mit Diaminen oder Polyaminen. Dabei bilden sich Prepolymere in Form von Polyharnstoffharzen, welche verbleibendes Polyisocyanat in Form mikroskopischer Teilchen umhüllen und von der Umgebung isolieren.

Wird die mikroverkapselte Isocyanatkomponente in das Klebstoffsystem eingearbeitet, erhält man ein stabiles System zweier Komponenten, welches erst oberhalb von etwa 80 bis 100°C nach Abschmelzen bzw. Auflösen des Polyharnstoffs reagiert.

Als Harzkomponente und Reaktionspartner für die Polyisocyanate kommen alle Formen von Polyolen und höhermolekularen und thermoplastischen Polyaminen in Frage, beispielsweise Polyetherole, Polyesterole, OH-funktionelle, Poly(meth)acrylate und -urethane oder NH₂-funktionelle Polyamide. Insbesondere geeignet sind eine Reihe von OH-funktionellen Harzen, wie beispielsweise Polyacrylatharze mit einer Molmasse von 2000 bis 6000 g/Mol mit einem OH-Gehalt von 1 bis 5 Gew.-%, gesättigte Polyester mit einer Molmasse von 500 bis 6000 g/Mol und einem OH-Gehalt von 1 bis 8 Gew.-% und Polyether mit einer Molmasse von 500 bis 3000 g/Mol und einem Oh-Gehalt von 1 bis 12 Gew.-%.

Das Reaktionsschema sieht dabei wie folgt aus:

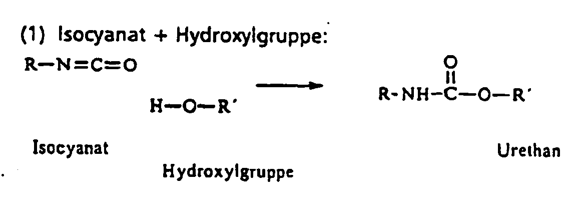

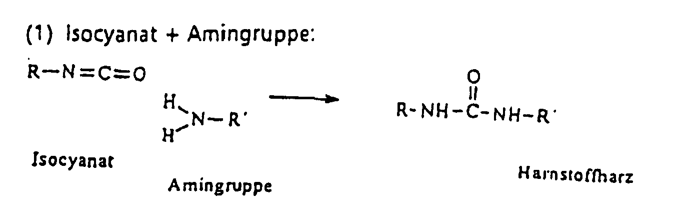

Die Vernetzungsdichte kann dabei erfindungsgemäß über den Anteil der reaktiven Gruppen so eingestellt werden, daß der thermoplastische Charakter der Klebstoffschicht verloren geht, die erforderliche Elastizität aber erhalten bleibt.

Auch bei dieser Ausführungsform des erfindungsgemäßen Verfahrens bzw. Klebstoffsystems sind Laminierungstemperatur und Aktivierungstemperatur für das Klebstoffsystem aufeinander abgestimmt dergestalt, daß die Aktivierung bei der Laminierungstemperatur automatisch erfolgt. Dies führt dann zur Einleitung der Vernetzung des thermoplastischen Kunststoffs des Klebstoffsystems.

Wie zuvor kann auch hier das Klebstoffsystem in Form einer Lösung in beispielsweise Tolol verarbeitet werden, wobei aber in der Regel die flüssige Natur der thermoplastischen Kunststoffkomponenten ausgenutzt werden kann, um das System zu applizieren.

Die erfindungsgemäßen Klebstoffsysteme können übliche Zusätze enthalten, um beispielsweise Stabilität und Verarbeitbarkeit zu beeinflussen oder die Aktivierungstemperatur herabzusetzen. Als Füllstoff kommt insbesondere Silikat in Frage, da hierdurch eine thixotrope Einstellung des Klebstoffsystems erreicht werden kann, was die Applikation auf die Kartenschichten erleichtert.

Die Verwendung des vernetzten Klebstoffsystems gemäß der Erfindung führt insbesondere zu einer Erhöhung der Temperaturbeständigkeit und Verbundfestigkeit damit verklebter Gegenstände. Wesentlich für dieses verbesserte Eigenschaftsprofil ist die Überführung eines ursprünglich rein thermoplastischen reversiblen Klebstoffsystems in eine vernetzte Struktur. Derartige Klebstoffsysteme erhöhen die Sicherheit vor Manipulationen z. B. durch Delamination einzelner Deckschichten in laminierten Ausweiskarten.

Die erfindungsgemäßen Klebstoffsysteme können ferner als Kaschierung für Magnetstreifen, Hologramme, Unterschriftsstreifen und andere Applikationen auf Karten und Ausweisdokumenten eingesetzt werden. Sie sind auch hier unter dem Aspekt höherer Verbundfestigkeit, Temperatur- und Lösemittelbeständigkeit zum Schutz vor Manipulationen und Mißbrauch mit Vorteil einsetzbar.

Im übrigen können die Klebstoffsysteme auf allen technischen Gebieten, bei denen eine dauerhafte Vernetzung der Klebstoffschicht vorteilhaft ist, eingesetzt werden.

## Patentansprüche

1. Verfahren zur Herstellung, mehrschichtiger Dokumentenkarten, insbesondere einer mehrschichtigen Ausweiskarte aus Kunststoff, wobei die Karte einen Kartenkern mit wenigstens einer Kartenkernschicht, einer Deckschicht auf jeder Seite des Kartenkerns und Klebstoffschichten zwischen den einzelnen Kartenschichten aufweist und der Kartenkern ein- oder zweiseitig bedruckt ist, mit den folgenden Verfahrensschritten:
- Bereitstellen der bedruckten Schicht oder Schichten des Kartenkerns,
- Bereitstellen der Deckschichten,
- Aufbringen der Klebstoffschichten auf die einzelnen Deck- und/oder Kernschichten,
- positionsgenaues Übereinanderlegen der einzelnen Kartenschichten,
- Verbinden der Kartenschichten in einer Laminationspresse unter dem Einfluß von Druck und Wärme,
**dadurch gekennzeichnet, daß** in wenigstens einer Klebstoffschicht ein unter dem Einfluß von Druck und Wärme vernetzbares Klebstoffsystem mit einer thermoplastischen Kunststoffkomponente und einer Vernetzerkomponente verwandt wird, wobei die Laminierungstemperatur und Aktivierungstemperatur des Klebstoffsystems in der Art aufeinander abgestimmt sind, das die Aktivierung stattfindet, wenn die Laminierungstemperatur erreicht ist, und wobei das Klebstoffsystem (a) einen thermoplastischen Kunststoff mit Doppelbindungen und ein Peroxid oder (b) eine Polyisocyanatkomponente und eine damit reaktive, aktiven Wasserstoff enthaltende Kunststoffkomponente enthält.

2. Verfahren nach Anspruch 1, **dadurch gekennzeichnet, daß** das Peroxid eine Aktivierungstemperatur von 60°C oder mehr aufweist.

3. Verfahren nach Anspruch 1 oder 2, **dadurch gekennzeichnet, daß** das Peroxid eine Aktivierungstemperatur von 80 bis 250°C aufweist.

4. Verfahren nach einem der Ansprüche 1 bis 3, **dadurch gekennzeichnet, daß** der thermoplastische Kunststoff ein ungesättigtes Polyamid ist.

5. Verfahren nach Anspruch 4, **dadurch gekennzeichnet, daß** das ungesättigte Polyamid ein Kondensat aus Polyaminen und ungesättigten dimeren Fettsäuren ist.

6. Verfahren nach Anspruch 5, **dadurch gekennzeichnet, daß** die ungesättigte dimere Fettsäure dimerisierte Linolsäure ist.

7. Verfahren nach Anspruch 1, **dadurch gekennzeichnet, daß** das Polyisocyanat eines auf Basis von HDI, IPDI, TDI oder MDI ist.

8. Verfahren nach Anspruch 1 oder 7, **dadurch gekennzeichnet, daß** das Polyisocyanat mit einem Polyamin teilvernetzt vorliegt.

9. Verfahren nach Anspruch 1, **dadurch gekennzeichnet, daß** die Isocyanatgruppen des Polyisocyanats blockiert sind.

10. Verfahren nach Anspruch 9, **dadurch gekennzeichnet, daß** das Polyisocyanat bei 60°C oder mehr deblockiert.

11. Verfahren nach Anspruch 9 oder 10, **dadurch gekennzeichnet, daß** das Polyisocyanat bei einer Temperatur im Bereich von 80 bis 250°C deblockiert.

12. Verfahren nach einem der Ansprüche 9 bis 11, **dadurch gekennzeichnet, daß** das Polyisocyanat mit Phenol, ε-Caprolactam, Butanonoxim oder Malonsäureester blockiert ist.

13. Verfahren nach einem der Ansprüche 9 bis 11, **dadurch gekennzeichnet, daß** das Polyisocyanat durch Dimerisierung zu Urethdion blockiert ist.

14. Verfahren nach einem der Ansprüche 9 bis 11, **dadurch gekennzeichnet, daß** das Polyisocyanat durch Mikroverkapselung mechanisch blockiert ist.

15. Verfahren nach Anspruch 1 oder einem der Ansprüche 7 bis 14, **dadurch gekennzeichnet, daß** die Kunststoffkomponente ein Polyesterpolyol, Polyetherpolyol, OH-funktionelles Polyacrylatharz oder NH₂-funktionelles Polyamid ist.

## Claims

1. Method for producing multi-layer document cards, especially a multi-layer identity card made of plastic, comprising several layers, with said card comprising a card core with at least one card core layer, a protective layer on each side of said card core, and adhesive layers between the individual card layers, and with the card core being imprinted either on one or on two sides; the method is carried out in the following manner:
- The printed layer(s) of the card core are prepared,
- the protective layers are prepared,
- the adhesive layers are applied to the individual protective and/or core layers,
- the individual card layers are precisely positioned one on top of the other,
- the card layers are joined together in a lamination press with the aid of pressure and heat;
**characterized in that,** an adhesive system which is cross-linked under the effect of pressure and heat, comprising a thermoplastic synthetic component and a cross linking component, is used in at least one adhesive layer, wherein the lamination temperature and activation temperature for the adhesive system are matched to each other in such a manner that activation takes place as soon as the lamination temperature is reached, and wherein the adhesive system comprises (a) a thermoplastic synthetic material with double bonds and a peroxide or (b) a polyisocyanate component and a plastic component that reacts with it and contains active hydrogen.

2. The method according to claim 1, **characterized in that** the peroxide has an activation temperature of 60°C or above.

3. The method according to claim 1 or 2, **characterized in that** the peroxide has an activation temperature ranging between 80°C and 250°C.

4. The method according to at least one of the claims 1 to 3, **characterized in that** the thermoplastic synthetic material is an unsaturated polyamide.

5. The method according to claim 4, **characterized in that** the unsaturated polyamide is a condensate from polyamines and unsaturated dimeric fatty acids.

6. The method according to claim 5, **characterized in that** the unsaturated dimeric fatty acid is a dimerized linoleic acid.

7. The method according to claim 1, **characterized in that** the polyisocyanate is a polyisocyanate on the basis of HDI, IPDI, TDI or MDI.

8. The method according to claim 1 or 7, **characterized in that** the polyisocyanate is present in partially cross-linked condition with a polyamine.

9. A method according to claim 1, **characterized in that** the isocyanate groups of the polyisocyanate are blocked.

10. The method according to claim 9, **characterized in that** the polyisocyanate deblocks at 60°C or higher.

11. Method according to claim 9 or 10, **characterized in that** the polyisocyanate deblocks at a temperature ranging between 80 and 250°C.

12. The method according to at least one of the claims 9 to 11, **characterized in that** the polyisocyanate is blocked with phenol, ε-caprolactam, butanonoxim or malonic ester.

13. The method according to at least one of the claims 9 to 11, **characterized in that** the polyisocyanate is blocked by dimerization to form urethdion.

14. The method according to at least one of the claims 9 to 11, **characterized in that** the polyisocyanate is blocked mechanically by microencapsulation.

15. The method according to claim 1 or at least one of the claims 7 to 14, **characterized in that** the plastic component is a polyesterpolyol, polyetherpolyol, OH functional polyacrylate resin or NH₂ functional polyamide.

## Revendications

1. Procédé de production de cartes documents multicouches, en particulier d'une carte d'identité multicouche en matière synthétique, la carte présentant une âme de carte avec au moins une couche d'âme de carte, une couche de couverture de chaque côté de l'âme de carte et des couches d'adhésif entre les différentes couches de carte, et l'âme de carte étant imprimée sur une ou deux faces, comportant les étapes de procédé suivantes :
- fourniture de la ou des couche(s) imprimée(s) de l'âme de carte,
- fourniture des couches de couverture,
- application des couches d'adhésif sur les différentes couches de couverture et/ou d'âme,
- superposition précise des différentes couches de la carte,
- liaison des couches de carte dans une presse à laminage avec apport de pression et de chaleur,
**caractérisé en ce que**, dans au moins une couche d'adhésif, on utilise un système adhésif réticulable sous l'effet de la pression et de la chaleur, avec un composant synthétique thermoplastique et un composant à réticulation, la température de laminage et la température d'activation du système adhésif étant ajustées l'une à l'autre de telle manière que l'activation se produit lorsque la température de laminage est atteinte, et dans lequel le système adhésif contient (a) une matière synthétique thermoplastique à doubles liaisons et un peroxyde, ou (b) un composé de polyisocyanate et un composant synthétique réactif avec lui, contenant de l'hydrogène actif.

2. Procédé selon la revendication 1, **caractérisé en ce que** le peroxyde présente une température d'activation de 60°C ou plus.

3. Procédé selon la revendication 1 ou 2, **caractérisé en ce que** le peroxyde présente une température d'activation de 80 à 250 °C.

4. Procédé selon l'une des revendications 1 à 3, **caractérisé en ce que** la matière synthétique thermoplastique est un polyamide insaturé.

5. Procédé selon la revendication 4, **caractérisé en ce que** le polyamide insaturé est un condensé de polyamines et d'acides gras dimères insaturés.

6. Procédé selon la revendication 5, **caractérisé en ce que** l'acide gras dimère insaturé est l'acide linoléique dimérisé.

7. Procédé selon la revendication 1, **caractérisé en ce que** le polyisocyanate est à base de HDI, IPDI, TDI ou MDI.

8. Procédé selon la revendication 1 ou 7, **caractérisé en ce que** le polyisocyanate est présent sous forme partiellement réticulée avec une polyamine.

9. Procédé selon la revendication 1, **caractérisé en ce que** les groupes isocyanate du polyisocyanate sont bloqués.

10. Procédé selon la revendication 9, **caractérisé en ce que** le polyisocyanate se débloque à 60°C ou plus.

11. Procédé selon la revendication 9 ou 10, **caractérisé en ce que** le polyisocyanate se débloque à une température comprise entre 80 et 250°C.

12. Procédé selon l'une des revendications 9 à 11, **caractérisé en ce que** le polyisocyanate est bloqué avec du phénol, du ε-caprolactame, de la butanonoxime ou de l'ester d'acide malonique.

13. Procédé selon l'une des revendications 9 à 11, **caractérisé en ce que** le polyisocyanate est bloqué par dimérisation en urethdion.

14. Procédé selon l'une des revendications 9 à 11, **caractérisé en ce que** le polyisocyanate est bloqué mécaniquement par micro-encapsulage.

15. Procédé selon la revendication 1 ou l'une des revendications 7 à 14, **caractérisé en ce que** le composant synthétique est un polyesterpolyol, un polyétherpolyol, une résine polyacrylate à groupe OH fonctionnel, ou un polyamide à groupe NH₂ fonctionnel.
